# EUROPÄISCHE PATENTSCHRIFT

(11) **EP 2 316 712 B1**
(45) Veröffentlichungstag und Bekanntmachung des Hinweises auf die Patenterteilung: **09.05.2012**
(21) Anmeldenummer: 10013838.7
(22) Anmeldetag: 21.10.2010
(51) Int. Cl.: B62D 29/00

(54) **Verbundprofil bestehend aus wenigstens einem ersten und zweiten Metallprofilteil**
Compound profile consisting of at least a first and a second metal profile section
Profilé composite constitué d'au moins un premier et un second élément de profilé métallique

(30) Priorität: 27.10.2009 DE 102009050775
(43) Veröffentlichungstag der Anmeldung: 04.05.2011
(73) Patentinhaber: Audi AG, 85045 Ingolstadt (DE)
(72) Erfinder: Gotthelf, Matthias, 74861 Neudenau (DE); Sander, Jürgen, 74523 Schwäbisch Hall (DE); Keith, Torsten, 74243 Langenbrettach (DE); Hoffmann, Alexander, 74626 Bretzfeld (DE); Grasl, Wolfgang, 4963 St. Peter (AT); Ellermann, Frank, 94094 Malching (DE)
(74) Vertreter: Patzelt, Heike Anna Maria

(56) Entgegenhaltungen:
- WO-A1-92/14006
- DE-A1- 19 609 722
- DE-A1-102007 018 458
- DE-A1-102007 018 459
- US-A- 5 271 687
- US-A1- 2004 004 109

## Beschreibung

Die Erfindung betrifft ein Verbundprofil bestehend aus wenigstens einem ersten und zweiten Metallprofilteil gemäß Oberbegriff des Patentanspruchs 1 sowie dessen Verwendung als Karosseriebauteil im Fahrzeugbau.

Aus der DE 10 2007 018 459 A1 sowie US5271687 ist ein solches Verbundprofil zur Verwendung als Karosseriebauteil für ein Kraftfahrzeug bekannt. Dieses Verbundprofil besteht aus einem im Querschnitt U-förmigen Profilteil, das als Einzelbauelement über seine beiden freien Schenkel mit einem weiteren als Hohlprofil mit mehreren Kammern ausgebildeten Bauteil verbunden wird. In Querrichtung der beiden zu verbindenden Profilteile weisen diese übereinstimmende Abmessungen auf, so dass über stufige Absätze diese Bauteile derart unter Ausbildung von Schweißstößen zusammengesteckt werden können, dass die aneinanderstoßenden Flächen miteinander fluchten. Die Verbindung erfolgt dann bspw. über eine Schweißverbindung, insbesondere durch Rührreibschweißen.

Im Karosseriebau für Kraftfahrzeuge werden zunehmend im Querschnitt relativ große Hohlprofile eingesetzt, die bspw. aus Aluminium-Strangpressprofilen hergestellt werden. Bei Strangpressprofilen gibt es seitens der Fertigungstechnik eine Abhängigkeit der minimal pressbaren Wandstärke zur Größe es Profilquerschnitts, d. h. die Wanddicke der einzelnen Innen- oder Außenwände des Strangpressprofils wird umso größer, je größer der Querschnitt des Hohlprofils sein soll.

Es ist bekannt, dünnwandige Profilteile mit großem Querschnitt dadurch herzustellen, indem Profilteile mit kleinen Querschnitten zusammengesetzt werden. Ein solches Vorgehen ist bspw. aus der DE 10 2007 458 A1 bekannt, bei dem Einzelstrangpressprofile über stumpf aufeinander stoßende Verbindungsstellen miteinander bspw. mittels Rührreibschweißen verschweißt werden.

Aufgabe der Erfindung ist es, ein Verbundprofil bestehend aus wenigstens einem ersten und zweiten Metallprofilteil der eingangs genannten Art anzugeben, das gegenüber dem Stand der Technik verbesserte Eigenschaften aufweist.

Diese Aufgabe wird gelöst durch ein Verbundprofil mit den Merkmalen des Patentanspruchs 1.

Bei einem solchen Verbundprofil, bestehend aus wenigstens einem ersten und zweiten Metallprofilteil, wobei das erste Metallprofilteil mit zwei parallelen Schenkeln einen U-förmigen Teilquerschnitt aufweist und über diese Schenkel mittels Schweißen mit dem zweiten Metallprofilteil verbunden wird, ist erfindungsgemäß vorgesehen, dass
- wenigstens ein Schenkel des ersten Metallprofilteils mit einer Außenfläche des zweiten Metallprofilteils einen T-Stoß bildet, und
- im Kehlbereich des T-Stoßes eine im Querschnitt im Wesentlichen dreiecksförmige Nase sowohl am Rand des einen Schenkels des ersten Metallprofilteils als auch auf der Außenfläche des zweiten Metallprofilteils derart angeformt ist, dass die Nasen mit jeweils einer ihrer Flächen flächig unter Ausbildung eines Schweißstoßes aneinander liegend zusammen einen dreiecksförmigen Querschnitt bilden.

Mit dieser erfindungsgemäßen Gestaltung der des ersten und zweiten Metallprofilteils kann im Kehlbereich des T-Stoßes eine Kehlnaht mittels Schweißen zur Verbindung der beiden Bauteile eingebracht werden, die ohne eine Stützrippe zur Abstützung der Schweißkraft auskommt, insbesondere bei Verwendung von Rührreibschweißen, das im Vergleich zu anderen Schweißverfahren zu einem geringeren Wärmeeintrag führt und bereits dadurch ein geringer Verzug vorhanden ist.

Bei einer vorteilhaften Weiterbildung der Erfindung sind die beiden Nasen derart ausgebildet sind, dass der Schweißstoß im Wesentlichen auf der Diagonalen des Kehlbereichs verläuft. Damit wird eine optimale Zugänglichkeit durch das Schweißwerkzeug, insbesondere durch ein Werkzeug für Rührreibschweißen sichergestellt.

Besonders vorteilhaft ist, wenn gemäß einer vorteilhaften Weiterbildung der Erfindung im Bereich des T-Stoßes das zweite Metallprofilteil zur Verbindung mit dem ersten Metallprofilteil eine Verbindungsnut mit einer im Wesentlichen senkrecht auf der Außenfläche stehenden inneren Nutwand und einer von der den Schweißstoß bildenden Fläche gebildeten äußeren Nutwand aufweist, wobei der Nutgrund an die Stirnfläche des einen Schenkels angepasst ist. Mit einer solchen Verbindungsnut kann das erste Metallprofilteil an dem zweiten Metallprofilteil vor dem Schweißen fixiert werden.

Bei einer anderen Weiterbildung der Erfindung liegt zur Ausbildung eines weiteren Schweißstoßes der weitere Schenkel des ersten Metallprofilteils flächenbündig an den Flächen eines an einer Kante des zweiten Metallprofilteils angeformten stufigen Absatzes flächenbündig an, wobei vorzugsweise der stufige Absatz derart ausgebildet ist, dass die an dem Schweißstoß angrenzenden Außenflächen des ersten und zweiten Metallprofilteils miteinander fluchten.

Besonders vorteilhaft hinsichtlich des weiteren Schweißstoßes ist es dabei, dass zur Bildung des Schweißstoßes eine Stirnfläche des Schenkels flächenbündig an einer Stufenfläche des Absatzes anliegt und dabei die Stirnfläche und die Stufenfläche hinsichtlich der angrenzenden Außenflächen derart geneigt verlaufen, dass an der Stufenfläche des Absatzes ein Hinterschnitt entsteht.

In vorteilhafter Weise ist das zweite Metallprofilteil als Hohlprofil mit mehreren Kammern ausgebildet.

Das erste Metallprofilteil kann als U-förmiges Profilteil ausgebildet werden. Daneben ist es auch möglich, dass der U-förmige Teilquerschnitt des ersten Metallprofilteil Teil eines Querschnittes eines Hohlprofils mit wenigsten einer Kammer ist.

Gemäß einer Weiterbildung der Erfindung ist das erste und zweite Metallprofilteil aus einem Strangpressprofil gebildet.

Zur Verbindung des ersten Metallprofilteil mit dem zweiten Metallprofilteil wird bevorzugt Rührreibschweißen vorgeschlagen, das vorteilhaft aufgrund des geringen Wärmeeintrags zu einem geringen Verzug und damit zu guten Materialeigenschaften führt.

In vorteilhafter Weise wird das erfindungsgemäße Verbundprofil zur Herstellung von Karosseriebauteilen im Kraftfahrzeugbau verwendet.

Die Erfindung wird nachfolgend anhand eines Ausführungsbeispiels unter Bezugnahme auf die beigefügten Figuren ausführlich beschrieben. Es zeigen:
- Figur 1: eine Querschnittsdarstellung eines Ausführungsbeispiels eines erfindungsgemäßen Verbundprofils,
- Figur 2: eine vergrößerte Darstellung des Details A nach Figur 1,
- Figur 3: eine vergrößerte Darstellung des zweiten Metallprofilteils 3 nach Figur 2, und
- Figur 4: eine vergrößerte Darstellung des Details B nach Figur 1.

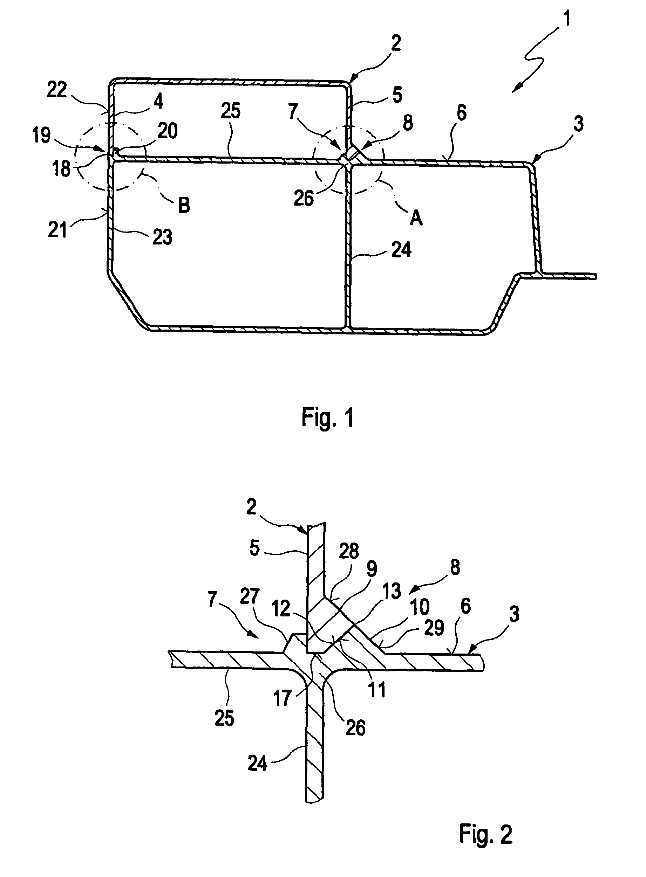

Figur 1 zeigt den Querschnitt eines Verbundprofils 1, das aus einem ersten Metallprofilteil 2 mit U-förmigen Querschnitt und einem zweiten, als Hohlprofil mit zwei Kammern ausgebildeten Metallprofilteil 3 aufgebaut ist. Beide Metallprofilteile 2 und 3 sind aus einem Aluminium-Strangpressprofil hergestellt.

Das erste U-förmige Metallprofilteil 2 steht mit seinen beiden Schenkeln 4 und 5 derart stumpf auf einer Außenfläche 6 des zweiten Metallprofilteils 3, dass der Schenkel 4 mit der die Außenfläche 21 aufweisende Wand 23 des zweiten Metallprofilteils 3 und der weitere Schenkel 5 mit einer Zwischenwand 24 des zweiten Metallprofilteils 3 fluchtet, wobei diese Zwischenwand die beiden Kammern des zweiten Metallprofilteils 3 trennt.

Eine Außenfläche 22 des Schenkels 4 bildet damit mit der Außenfläche 21 eine ebene Oberfläche. Die Verbindung dieses Schenkels 4 mit dem zweiten Metallprofilteil 3 über einen Schweißstoß 18 wird als Detail B weiter unten erläutert.

Der andere Schenkel 5 des ersten Metallprofilteils 2 bildet mit einer über beide Kammern verlaufenden Wand 25 des zweiten Metallprofilteils 3 einen T-Stoß 7, wobei sich außen im Bereich dieses T-Stoßes 7 der zugehörige Kehlbereich 8 befindet.

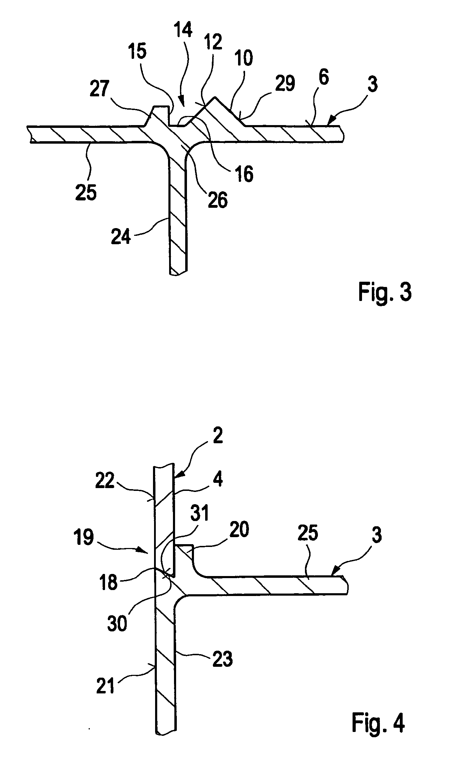

Dieser T-Stoß 7 mit dem Kehlbereich 8 wird anhand der Figuren 2 und 3, die einen detaillierteren Ausschnitt A gemäß Figur 1 zeigen, erläutert.

Gemäß Figur 3 ist in einem Knoten 26 des zweiten Metallprofilteils 3 eine Verbindungsnut 14 mit einer im Wesentlichen auf der Außenfläche 6 senkrecht stehenden inneren Nutwand 15, einem Nutgrund 16 und einer äußeren Nutwand 12 angeformt. Die innere Nutwand 15 wird von einer überstehenden im Querschnitt trapezförmigen Nase 27 gebildet. Die äußere Nutwand 12 steht nach außen geneigt mit einem Winkel von ca. 45° und stellt eine Fläche einer Nase 10 mit dreiecksförmigen Querschnitt dar, wobei auch die zweite Fläche 29 dieser Nase 10 unter einem Winkel von ca. 45° gegenüber der Oberfläche 6 geneigt ist.

Wie Figur 1 und insbesondere Figur 2 zeigt, fügt sich das freie Ende des Schenkels 5 mit seiner Stirnfläche 17 passgenau in diese Verbindungnut 14 ein. Hierzu ist auch an diesem freien Ende des Schenkels 5 eine Nase 9 mit dreiecksförmigen Querschnitt unter Ausbildung von Flächen 11 und 28 angeformt, so dass die Fläche 11 dieser Nase 9 unter Ausbildung einer Schweißstoßes 13 an der Fläche 12 der auf der Oberfläche 6 angeordneten Nase 10 anliegt. Die beiden anderen Flächen 28 und 29 der Nasen 9 und 10 bilden gemeinsam eine ebene Oberfläche. Damit verläuft der Schweißstoß 13 im Wesentlichen in der Diagonale des Kehlbereichs 8.

Dieser Schweißstoß 13 dient dazu, die beiden Metallprofilteile 2 und 3 durch eine Rührreibschweißung durch Erzeugen einer Kehlnaht miteinander zu verbinden. Hierbei wird ein rotierende Stift, der aus einer zylindrischen Schulter eines Werkzeugs herausragt, mit großer Kraft in diesen Schweißstoß 13 gedrückt, bis die Werkzeugschulter auf der von den beiden Nasen 9 und 10 gebildeten Oberfläche aufliegt. Das Werkzeug wird entlang der Fügelinie bewegt, wobei sich durch die Reibung zwischen der Werkzeugschulter und den Nasen 9 und 10 das Material erwärmt und durch die Rotation des Stiftes verrührt wird, so dass sich an dem Schweißstoß 13 der Schenkel 5 mit der Wand 25 in einem Warmumformprozess unter Bildung einer Kehlnaht verbindet.

Da einer der Vorteile dieses Schweißverfahrens darin besteht, dass im Vergleich zu anderen Schweißverfahren nur ein geringer Wärmeeintrag erfolgt und damit auch nur ein geringer Verzug sich einstellt, kann aufgrund der erfindungsgemäßen Geometrie der beiden Metallprofilteile 2 und 3 in dem T-Stoß 7 auf eine sonst erforderliche Abstützrippe verzichtet werden.

Die noch fehlende Verschweißung des anderen Schenkels 4 des ersten Metaltprofilteils 2 mit dem zweiten Metallprofilteil 3 über den bereits oben erwähnten weiteren Schweißstoß 18 kann gleichzeitig mit dem Verschweißen des Schweißstoßes 13 oder nach dessen Verschweißung durchgeführt werden. Auch diese Verschweißung des weiteren Schweißstoßes 18 erfolgt vorzugsweise mittels des bereits erläuterten Rührreibschweißens.

Zur Ausbildung des weiteren Schweißstoßes 18 ist an einer Kante 19 des zweiten Metallprofilteils 3, an der der Schenkel 4 anliegt, ein gestufter Absatz 20 mit einer Hinterschneidung an dessen Stufenfläche 31 derart ausgebildet, dass das Ende des Schenkels 4 formschlüssig in den Absatz 20 eingreift und dabei die an den Schweißstoß 18 angrenzenden Flächen 22 bzw. 21 des Schenkels 4 bzw. der Wand 23 eine ebene Oberfläche bilden. Zur Bildung der Hinterschneidung verlaufen die den Schweißstoß 18 bildenden flächenschlüssig aneinander liegenden Flächen 30 und 31 nicht in der Ebene der Wand 25, also senkrecht zu den Außenflächen 21 und 22, sondern nach innen geneigt. Dabei stellt die Fläche 30 die Stirnfläche des freien Schenkels 4 und die Fläche 31 die Stufenfläche des Absatzes 20 dar.

Natürlich kann anstelle des U-förmigen ersten Metallprofilteils 2 ein Hohlprofil mit einem U-förmigen Teilquerschnitt eingesetzt werden. Ferner können durch entsprechende Ausbildung der Kontaktstellen mehrere solcher ersten Metallprofilteile mit dem ersten Metallprofilteil verbunden werden. Schließlich ist es auch möglich, in entsprechender Weise ein drittes Metallprofilteil mit dem zweiten Metallprofilteil zu verbinden, so dass das entstehende Verbundprofil aus drei Metallprofilteilen besteht.

### Bezugszeichen

- 1: Verbundprofil
- 2: erstes Metallprofilteil
- 3: zweites Metallprofilteil
- 4: Schenkel des ersten Metallprofilteils 2
- 5: Schenkel des ersten Metallprofilteils 2
- 6: Außenfläche des zweiten Metallprofilteils 3
- 7: T-Stoß
- 8: Kehlbereich im T-Stoß 7
- 9: dreiecksförmige Nase am Schenkel 5

- 10: dreiecksförmige Nase auf der Außenfläche 6
- 11: Fläche an der Nase 9
- 12: Fläche an der Nase 10
- 13: Schweißstoß
- 14: Verbindungsnut von Metallprofilteil 3
- 15: innere Nutwand von Verbindungsnut 14
- 16: Nutgrund von Verbindungsnut 14
- 17: Stirnfläche des Schenkels 5
- 18: weiterer Schweißstoß
- 19: Kante an dem zweiten Metallprofilteil 3

- 20: stufiger Absatz an der Kante 19
- 21: Außenfläche am zweiten Metallprofilteil 3
- 22: Außenfläche am ersten Metallprofilteil 2
- 23: Wand des zweiten Metallprofilteils 3
- 24: Zwischenwand des zweiten Metallprofilteils 3
- 25: Wand des zweiten Metallprofilteils 3
- 26: Knoten des zweiten Metallprofilteils 3
- 27: Nase
- 28: weitere Fläche an der Nase 9
- 29: weitere Fläche an der Nase 10
- 30: Stirnfläche des Schenkels 4
- 31: Stufenfläche des Absatzes 20

## Patentansprüche

1. Verbundprofil (1) bestehend aus wenigstens einem ersten und zweiten Metallprofilteil (2, 3), wobei das erste Metallprofilteil (2) mit zwei parallelen Schenkeln (4, 5) einen U-förmigen Teilquerschnitt aufweist und über diese Schenkel (4, 5) mittels Schweißen mit dem zweiten Metallprofilteil (3) verbunden wird,
**dadurch gekennzeichnet, dass**
- wenigstens ein Schenkel (5) des ersten Metallprofilteils (2) mit einer Außenfläche (6) des zweiten Metallprofilteils (3) einen T-Stoß (7) bildet, und
- im Kehlbereich (8) des T-Stoßes (7) eine im Querschnitt im Wesentlichen dreiecksförmige Nase (9, 10) sowohl am Rand des einen Schenkels (5) des ersten Metallprofilteils (2) als auch auf der Außenfläche (6) des zweiten Metallprofilteils (3) derart angeformt ist, dass die Nasen (9, 10) mit jeweils einer ihrer Flächen (11, 12) flächig unter Ausbildung eines Schweißstoßes (13) aneinander liegend zusammen einen dreiecksförmigen Querschnitt bilden.

2. Verbundprofil nach Anspruch 1,
**dadurch gekennzeichnet, dass** die beiden Nasen (9, 10) derart ausgebildet sind, dass der Schweißstoß (13) im Wesentlichen auf der Diagonalen des Kehlbereichs (8) verläuft.

3. Verbundprofil nach Anspruch 1 oder 2,
**dadurch gekennzeichnet, dass** im Bereich des T-Stoßes (7) das zweite Metallprofilteil (3) zur Verbindung mit dem ersten Metallprofilteil (2) eine Verbindungsnut (14) mit einer im Wesentlichen senkrecht auf der Außenfläche (6) stehenden inneren Nutwand (15) und einer von der den Schweißstoß (13) bildenden Fläche (12) gebildeten äußeren Nutwand aufweist, wobei der Nutgrund (16) an die Stirnfläche (17) des einen Schenkels (5) angepasst ist.

4. Verbundprofil nach einem der vorhergehenden Ansprüche,
**dadurch gekennzeichnet, dass** zur Ausbildung eines weiteren Schweißstoßes (18) der weitere Schenkel (4) des ersten Metallprofilteils (2) an den Flächen eines an einer Kante (19) des zweiten Metallprofilteils (3) angeformten stufigen Absatzes (20) flächenbündig anliegt.

5. Verbundprofil nach Anspruch 4,
**dadurch gekennzeichnet, dass** zur Bildung des Schweißstoßes (18) eine Stirnfläche (30) des Schenkels (4) flächenbündig an einer Stufenfläche (31) des Absatzes (20) anliegt und die Stirnfläche (30) und die Stufenfläche (31) hinsichtlich der angrenzenden Außenflächen (21, 22) derart geneigt verlaufen, dass an der Stufenfläche (31) des Absatzes (20) ein Hinterschnitt entsteht.

6. Verbundprofil nach Anspruch 4 oder 5,
**dadurch gekennzeichnet, dass** der stufige Absatz (20) derart ausgebildet ist, dass die an dem Schweißstoß (18) angrenzenden Außenflächen (21, 22) des ersten und zweiten Metallprofilteils (2, 3) miteinander fluchten.

7. Verbundprofil nach einem der vorhergehenden Ansprüche,
**dadurch gekennzeichnet, dass** das zweite Metallprofilteil (3) als Hohlprofil mit mehreren Kammern ausgebildet ist.

8. Verbundprofil nach einem der vorhergehenden Ansprüche,
**dadurch gekennzeichnet, dass** das das erste Metallprofilteil als U-förmiges Profilteil (2) ausgebildet ist.

9. Verbundprofil nach einem der Ansprüche 1 bis 7,
**dadurch gekennzeichnet, dass** der U-förmige Teilquerschnitt des ersten Metallprofilteils (1) Teil eines Querschnittes eines Hohlprofils mit wenigsten einer Kammer ist.

10. Verbundprofil nach einem der vorhergehenden Ansprüche,
**dadurch gekennzeichnet, dass** das erste und zweite Metallprofilteil (2, 3) aus einem Strangpressprofil gebildet sind.

11. Verbundprofil nach einem der vorhergehenden Ansprüche,
**dadurch gekennzeichnet, dass** das erste Metallprofilteil (2) mit dem zweiten Metallprofilteil (3) durch eine Rührreibschweißverbindung verbunden wird.

12. Verwendung des Verbundprofils nach einem der vorhergehenden Ansprüche für ein Karosseriebauteil eines Kraftfahrzeugs.

## Claims

1. Composite profile (1) consisting of at least a first and a second metal profiled part (2, 3), wherein the first metal profiled part (2) has a U-shaped partial cross section with two parallel limbs (4, 5) and is connected to the second metal profiled part (3) via said limbs (4, 5) by means of welding,
**characterized in that**
- at least one limb (5) of the first metal profiled part (2) forms a T-joint (7) with an outer face (6) of the second metal profiled part (3), and
- in the throat region (8) of the T-joint (7), a nose (9, 10) of substantially triangular cross section is moulded both on the edge of the one limb (5) of the first metal profiled part (2) and on the outer face (6) of the second metal profiled part (3), in such a manner that the noses (9, 10) together form a triangular cross section with in each case one of the faces (11, 12) thereof lying areally against one another to form a welded joint (13).

2. Composite profile according to Claim 1,
**characterized in that**
the two noses (9, 10) are formed in such a manner that the welded joint (13) runs substantially on the diagonal of the throat region (8).

3. Composite profile according to Claim 1 or 2,
**characterized in that**
in the region of the T-joint (7), the second metal profiled part (3) has, for connection to the first metal profiled part (2), a connection groove (14) having an inner groove wall (15) substantially perpendicular to the outer face (6) and an outer groove wall formed by that face (12) which forms the welded joint (13), the groove base (16) being matched to the end face (17) of the one limb (5).

4. Composite profile according to one of the preceding claims,
**characterized in that**
to form a further welded joint (18), the further limb (4) of the first metal profiled part (2) bears so as to be flush against the faces of a stepped shoulder (20) which is moulded on an edge (19) of the second metal profiled part (3).

5. Composite profile according to Claim 4,
**characterized in that**
to form the welded joint (18), an end face (30) of the limb (4) bears so as to be flush against a stepped face (31) of the shoulder (20), and the end face (30) and the stepped face (31) run at an inclination with respect to the adjoining outer faces (21, 22) in such a manner that an undercut is formed on the stepped face (31) of the shoulder (20).

6. Composite profile according to Claim 4 or 5,
**characterized in that**
the stepped shoulder (20) is formed in such a manner that the outer faces (21, 22) of the first and second metal profiled parts (2, 3) which adjoin the welded joint (18) are aligned with one another.

7. Composite profile according to one of the preceding claims,
**characterized in that**
the second metal profiled part (3) is in the form of a hollow profile with a plurality of chambers.

8. Composite profile according to one of the preceding claims,
**characterized in that**
the first metal profiled part is in the form of a U-shaped profiled part (2).

9. Composite profile according to one of Claims 1 to 7,
**characterized in that**
the U-shaped partial cross section of the first metal profiled part (2) is part of a cross section of a hollow profile with at least one chamber.

10. Composite profile according to one of the preceding claims,
**characterized in that**
the first and second metal profiled parts (2, 3) are formed from an extruded profile.

11. Composite profile according to one of the preceding claims,
**characterized in that**
the first metal profiled part (2) is connected to the second metal profiled part (3) by a friction stir welded joint.

12. Use of the composite profile according to one of the preceding claims for a body component of a motor vehicle.

## Revendications

1. Profilé composite (1) constitué d'au moins une première et une deuxième partie profilée métallique (2, 3), la première partie profilée métallique (2) présentant, avec deux branches parallèles (4, 5), une section transversale partielle en forme de U, et étant connectée à la deuxième partie profilée métallique (3) par soudage par l'intermédiaire de ces branches (4, 5),
**caractérisé en ce que**
- au moins une branche (5) de la première partie profilée métallique (2) forme avec une surface extérieure (6) de la deuxième partie profilée métallique (3) un joint en T (7) et
- dans la région de l'angle (8) du joint en T (7), un nez (9, 10) de section transversale de forme sensiblement triangulaire est façonné à la fois sur le bord d'une branche (5) de la première partie profilée métallique (2) et sur la surface extérieure (6) de la deuxième partie profilée métallique (3), de telle sorte que les nez (9, 10), avec l'une de leurs surfaces (11, 12) respectives, forment ensemble une section transversale de forme triangulaire en s'appliquant à plat l'un contre l'autre en formant un joint de soudure (13).

2. Profilé composite selon la revendication 1, **caractérisé en ce que** les deux nez (9, 10) sont réalisés de telle sorte que le joint de soudure (13) s'étende sensiblement sur la diagonale de la région de l'angle (8).

3. Profilé composite selon la revendication 1 ou 2, **caractérisé en ce que** dans la région du joint en T (7), la deuxième partie profilée métallique (3) présente, pour la connexion à la première partie profilée métallique (2), une rainure de connexion (14) avec une paroi de rainure intérieure (15) sensiblement perpendiculaire à la surface extérieure (6) et avec une paroi de rainure extérieure formée par la surface (12) formant le joint de soudure (13), la base de la rainure (16) étant adaptée à la surface frontale (17) de l'une des branches (5).

4. Profilé composite selon l'une quelconque des revendications précédentes,
**caractérisé en ce que** pour réaliser un autre joint de soudure (18), l'autre branche (4) de la première partie profilée métallique (2) s'applique en affleurement contre les surfaces d'un épaulement (20) étagé façonné sur une arête (19) de la deuxième partie profilée métallique (3).

5. Profilé composite selon la revendication 4, **caractérisé en ce que** pour former le joint de soudure (18), une surface frontale (30) de la branche (4) s'applique en affleurement contre une surface étagée (31) de l'épaulement (20) et la surface frontale (30) et la surface étagée (31) s'étendent de manière inclinée par rapport aux surfaces extérieures adjacentes (21, 22) de telle sorte qu'il se forme une contre-dépouille au niveau de la surface étagée (31) de l'épaulement (20).

6. Profilé composite selon la revendication 4 ou 5, **caractérisé en ce que** l'épaulement étagé (20) est réalisé de telle sorte que les surfaces extérieures (21, 22) adjacentes au joint de soudure (18) de la première et de la deuxième partie profilée métallique (2, 3) soient en affleurement l'une contre l'autre.

7. Profilé composite selon l'une quelconque des revendications précédentes, **caractérisé en ce que** la deuxième partie profilée métallique (3) est réalisée sous forme de profilé creux avec plusieurs chambres.

8. Profilé composite selon l'une quelconque des revendications précédentes,
**caractérisé en ce que** la première partie profilée métallique est réalisée sous forme de partie profilée en forme de U (2).

9. Profilé composite selon l'une quelconque des revendications 1 à 7,
**caractérisé en ce que** la section transversale partielle en forme de U de la première partie profilée métallique (2) fait partie d'une section transversale d'un profilé creux ayant au moins une chambre.

10. Profilé composite selon l'une quelconque des revendications précédentes,
**caractérisé en ce que** la première et la deuxième partie profilée métallique (2, 3) sont formées à partir d'un profilé filé.

11. Profilé composite selon l'une quelconque des revendications précédentes,
**caractérisé en ce que** la première partie profilée métallique (2) est connectée à la deuxième partie profilée métallique (3) par une connexion soudée par friction-malaxage.

12. Utilisation du profilé composite selon l'une quelconque des revendications précédentes, pour une pièce de carrosserie d'un véhicule automobile.
